# EUROPEAN PATENT SPECIFICATION

(11) **EP 1 933 350 B1**
(45) Date of publication and mention of the grant of the patent: **01.08.2012**
(21) Application number: 07254766.4
(22) Date of filing: 10.12.2007
(51) Int. Cl.: H01H 37/54

(54) **Automotive motor protector**
Motorschutzvorrichtung für Kraftfahrzeuge
Dispositif de protection pour véhicules automobiles

(30) Priority: 13.12.2006 US 610117
(43) Date of publication of application: 18.06.2008
(73) Proprietor: Sensata Technologies, Inc., Attleboro, MA 02703-0964 (US)
(72) Inventor: Sullivan, Steven K., Cranston, Rhode Island 02921-3219 (US); Cohen, Jonathan F., Douglas, Massachusetts 01516 (US)
(74) Representative: Legg, Cyrus James Grahame

(56) References cited:
- US-A- 6 020 807
- US-A1- 2005 122 202

## Description

### Field of the Invention

0001. This invention relates generally to engine cooling system motors that drive radiator fans in automotive applications and more particularly, to apparatus for protecting such motors from over-temperature operation during high-speed locked-rotor conditions.

### Background of the Invention

0002. Engine cooling system (ECS) brush-commutated motors that drive radiator fans in automotive applications do not presently include effective protection for motor winding insulation and brushes from over-temperature operation during high-speed locked-rotor conditions. Recent automotive recalls for radiator fan motor fires have resulted in the development of specifications for motor protection at the ECS system and motor manufacturer level. Manufacturers prefer modified reset (SAE type II) locked-rotor protection which does not automatically reset after trip; protecting consumers from personal injury due to unexpected fan blade rotation and increasing locked-rotor event reliability at 150A/15Vdc and 300A/24Vdc conditions.

0003. Any protector used for this purpose must be able to withstand underhood environmental conditions and preferably be adapted for mounting within the motor on the brush card in order to minimize salt spray degradation and optimize thermal sensitivity as well as to increase the motor manufacturer's value added.

0004. So-called self-hold protectors in which electrical contacts of a protector are maintained in the open contacts position following actuation to interrupt current to a load due to an overload until power is removed from the protector are known. For example, in UK Patent Application GB 2252674A, published August 12, 1992, a positive temperature coefficient of resistivity (PTC) heating element is received in a molded plastic housing that also mounts a snap-acting bimetal switch actuating element in heat conductive relation with the PTC element. Upon overheating of an appliance with which the protector is used, the snap-acting element actuates to open the contacts interrupting the load current and causing current to flow through the PTC element which self-heats to a high-resistance temperature thereby maintaining the snap-acting element in the actuated position with minimal current then passing through the PTC element. This device would not be useful in an automotive underhood environment, among other reasons, due to the fact that the various components are not sealed off from the environment and would be subject to deterioration from salt spray and the like.

0005. Another example is shown in U.S. Patent Number 6,020,807 that issued February 1, 2000. The protector of this patent comprises a can shaped, electrically conductive metallic housing in which a bimetal blade is cantilever mounted on the bottom wall of the housing, the blade mounting a movable electrical contact on the free end thereof and movable into and out of engagement with a stationary contact mounted on an electrically conductive cover plate that is mounted on the housing through an insulating sheet. A PTC element is mounted between and in electrical engagement with the cover plate and the fixed end of the bimetal blade. The bimetal blade carries the load current and when actuated causes the contacts to open thereby interrupting the load current and the blade is then maintained in the actuated position by heat from the PTC element which then limits the load current to a trickle level. In this arrangement, heat conduction between the PTC element and the bimetal blade is optimized due to the minimized thermal resistance between the two components. As a result, the arrangement limits the size and power produced by the PTC component to significantly affect all boundary conditions, limiting the useful self-hold function range relative to ambient temperature and voltage.

Another example of a low current motor protector is shown in the document US 2005/0122202 A1.

### Summary of the Invention

0006. It is an object of the present invention to provide a motor protector particularly adapted to protect automotive engine cooling system motors from locked-rotor conditions. Another object of the invention is the provision of a motor protector suitable for use in an automotive underhood environment and one that has a modified reset capability. Still another object is the provision of such a motor protector which is easily manufactured and assembled, is reliable, long lasting and relatively inexpensive. Still another object of the invention is the provision of a motor protector that has a modified reset capability that is effective over wide voltage and ambient temperature conditions associated with automotive applications, typically -40 degrees C to +110 degrees C ambient and 9Vdc to 16Vdc potential.

0007. Briefly, in accordance with the invention, a PTC (positive temperature coefficient) resistor is disposed in an environmentally sealed motor protector having a current carrying thermostatic disc mounted in a housing to avoid direct exposure to aggressive environmental conditions and efficiently elevate the internal ambient temperature of the motor protector and components over a wide range of voltage and external ambient temperature conditions. The motor protector comprises an electrically conductive metal housing having bottom and side walls and having a current-carrying snap-acting thermostatic disc, made of bimetal or the like, cantilever mounted on the bottom wall in a switch chamber of the motor protector. A movable electrical contact mounted at the free end of the disc is adapted to move into and out of engagement with a stationary electrical contact mounted on an electrically conductive metal heater/terminal plate member closing the switch chamber. An electrically conductive metal heater seat plate member, formed with a recess therein is received on a lip formed on the side walls of the housing so that the convex side of the recess is situated above and closely spaced from the thermostatic disc. The heater seat plate member is thermally and electrically connected to the housing. The heater seat plate member comprises a heat radiating surface generally coextensive with the disc, except for a portion mounting the movable electrical contact, enhancing convection heat transfer to the disc to supplement conduction heat transfer through the heater seat plate member, housing, spring and heater/terminal plate member to optimize the effectiveness of the self-hold function over the voltage and ambient temperature range required.

0008. A positive temperature coefficient of resistivity (PTC) heater element having opposed contact surfaces is received in the recess with one contact surface in engagement with the bottom wall of the recess. An electrically conductive spring member is mounted on the heater/terminal plate member that, in the assembled protector, resiliently engages the other contact surface of the PTC element. An electrically insulating sheet is interposed between the heater/terminal plate member and the heater seat plate member and is clamped to the housing by a pair of extensions of the housing side walls that are bent over onto the heater/terminal plate member but electrically isolated therefrom by the electrically insulating sheet.

0009. According to a feature of the invention, the recess of the heater seat plate member is formed with side walls that are inclined away from the interior of the recess to provide structure that prevents short circuiting across the contact layers of an electrical heater element having side surfaces that extend generally normal to the opposed contact layers thereof.

0010. According to another feature of the invention the heater element is a positive temperature coefficient resistor (PTC) element formed of either a ceramic or polymer PTC material. In the preferred embodiment described herein, an electrically conductive fluoropolymer, ECTFE, is employed.

0011. In the preferred embodiment described herein, the PTC heater element is coupled to the thermostatic disc both electrically and thermally through the physical engagement of the metal heater seat plate member and the metal housing. According to a modified preferred embodiment, this coupling is enhanced by a second path comprising an extension of the fixed end of the thermostatic disc that is bent back into a generally U-shaped configuration with the free end thereof engaging the heater seat plate member. In another modified preferred embodiment, a strip of the heater seat plate extends therefrom and is placed in engagement with the attachment slug of the thermostatic disc.

0012. The thermostatic disc's low-resistance current path carries load current during normal operation. A locked rotor condition increases the ampere level by 4-6 times thereby generating sufficient i²r heat to cause the thermostatic disc to actuate thereby opening the contact system. System voltage is then dropped across the high-resistance PTC heater element which produces sufficient power and surface temperature to keep the thermostatic disc from resetting until the potential is removed.

### Brief Description of the Drawings

0013. The above objects, features and advantages of the present invention will become apparent upon consideration of the following detailed description when taken in conjunction with the accompanying drawings wherein like reference characters in the several figures are utilized to designate like components, and wherein

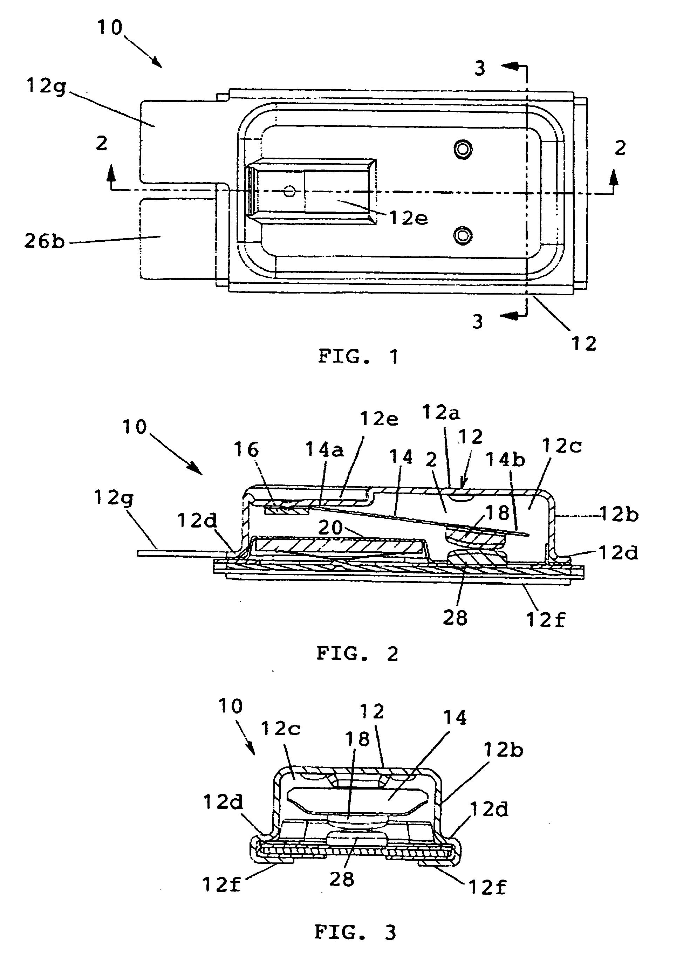

0014. Fig. 1 is a top plan view of an automotive motor protector made in accordance with the preferred embodiment of the invention;

0015. Fig. 2 is an elevational cross section taken on line 2-2 of Fig. 1;

0016. Fig. 3 is an elevational cross section taken on line 3-3 of Fig. 1;

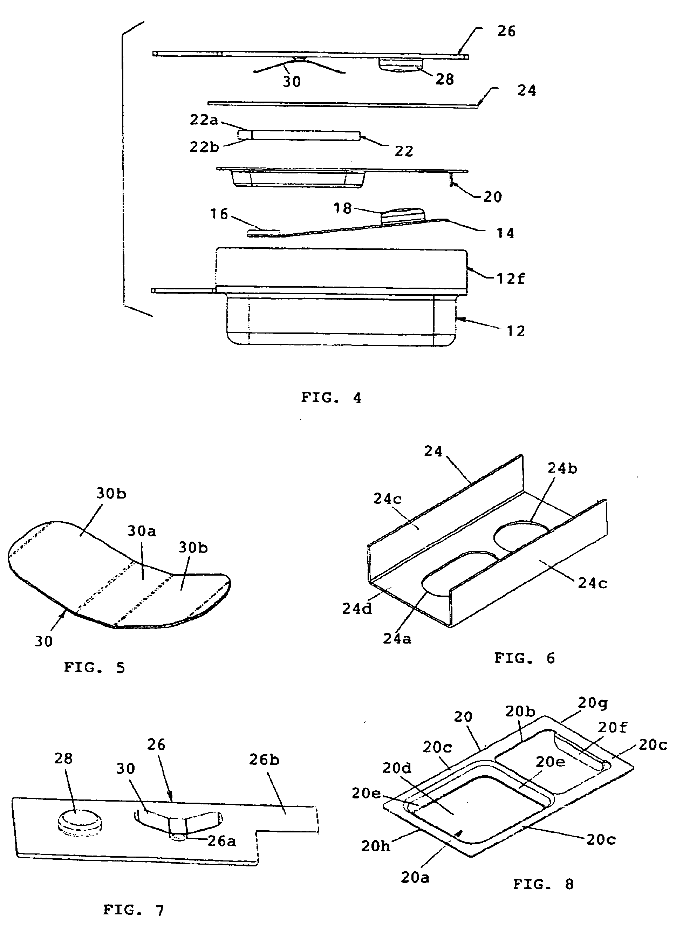

0017. Fig. 4 is an exploded front elevational view of the Fig. 1 protector;

0018. Fig. 5 is a perspective view of a PTC heater element contacting spring used in the Fig. 1 protector;

0019. Fig. 6 is a perspective view of an electrically insulating sheet used in the Fig. 1 protector;

0020. Fig. 7 is a perspective view of a heater/terminal plate assembly used in the Fig. 1 protector;

0021. Fig. 8 is a perspective view of a heater seat plate member used in the Fig. 1 protector;

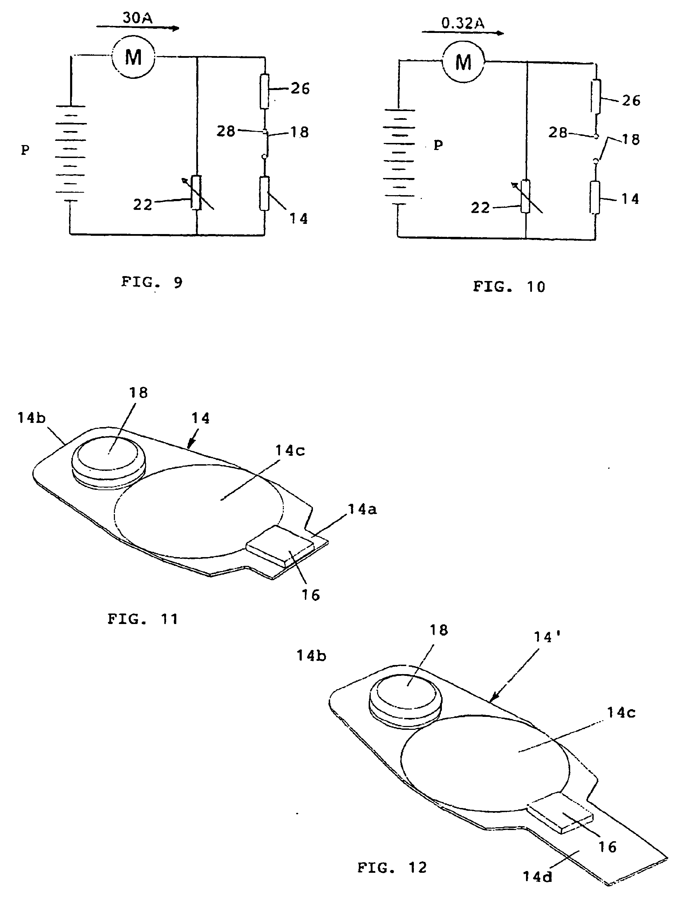

0022. Fig. 9 is a simplified circuit diagram of the automotive electrical system, motor and protector made in accordance with the invention shown with the thermostatic disc in the closed circuit, normal operating condition;

0023. Fig. 10 is a circuit diagram as shown in Fig. 9 but shown with the thermostatic disc in the open, locked rotor condition;

0024. Fig. 11 is a perspective view of the thermostatic disc assembly used in the Fig. 1 protector;

0025. Fig. 12 is a perspective view of a thermostatic disc used in a modified preferred embodiment of the invention;

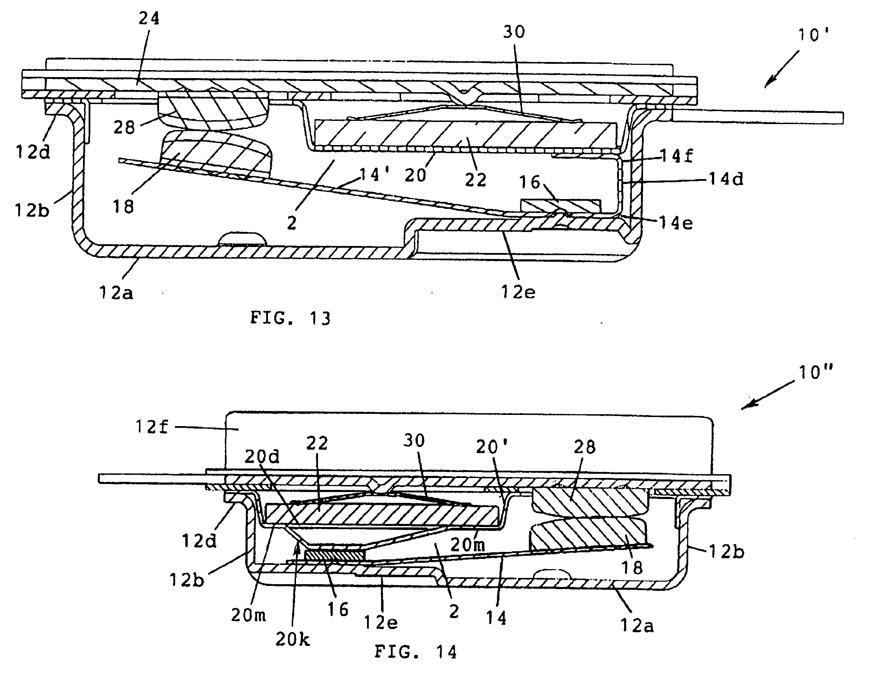

0026. Fig. 13 is an enlarged cross section view similar to Fig. 1 but showing a modified embodiment employing the thermostatic disc of Fig. 12; and

0027. Fig. 14 is a slightly enlarged cross sectional elevational view of another modified preferred embodiment of the invention shown prior to bending of flap 24c for clamping the metal heater/element place member to the housing.

### Detailed Description of Preferred Embodiment

0028. With reference to the drawings, particularly Figs. 1-8, an automotive motor protector 10 having a modified reset feature made in accordance with the preferred embodiment of the invention comprises an electrically conductive metal housing 12, shown bottom side up in the drawings, having a generally rectangular bottom wall 12a and a side wall 12b forming a switch chamber 12c open at the top thereof. Side wall 12b has a free end that is bent outwardly to form a lip 12d around the periphery of the housing. A snap-acting thermostatic disc 14 having opposite end portions 14a, 14b is cantilever mounted at end portion 14a to bottom wall 12a of the housing on a recessed mounting platform 12e, displaced into the switch chamber, as by welding at slug 16. A movable electrical contact 18 is mounted on thermostatic disc 14 at the free, second end portion 14b on the face side of the disc facing away from bottom wall 12a.

0029. A metal heater seat plate member 20, see Fig. 8, is formed of suitable heat and electrical conducting material, such as nickel zinc plated steel or bronze, with a drawn recess 20a, an opening 20b and a lip 20c extending outwardly around the periphery of plate 20 that matches lip 12d of the housing and is disposed thereon as shown in Figs. 2 and 3. Recess 20a has a flat bottom wall 20d and a side wall 20e that is inclined slightly, i.e., greater than 1 degree from normal, extending from the bottom wall in a direction away from the center of the recess providing a structural arrangement that avoids short circuiting of a heating element placed therein, to be discussed. Plate 20 is also preferably provided with a tab 20f that depends downwardly from lip 20c defining a side of opening 20b at end 20g of plate 20 with the tab serving as an alignment feature for assembling the protector, along with side wall 20e of the recess at end 20h of plate 20, received at the opening of switch chamber12c of the housing and with the convex side of recess 20a extending into the switch chamber.

0030. A PTC resistor heating element 22, generally in the configuration of a flat rectangular plate of material corresponding to but slightly smaller than the shape of the bottom wall 20d of recess 20a of the heater seat plate. The PTC heater element has side walls that are essentially normal with the face surfaces 22a, 22b (Fig. 4) on which the electrical contact layers are disposed, and when placed into the recessed seat 20a having the inclined side walls 20e of the heater seat plate, the likelihood of shorting between the contact layers is essentially eliminated. The PTC heater element may be formed of ceramic, such as barium titanate doped with a rare earth, know in the art, or a polymer PTC material. In the present embodiment, the PTC resistor heater element is formed of a polymer positive temperature coefficient (PPTC); such material having several advantages in high volume manufacturing and physical attributes compared to ceramic based materials. For example, PPTC elements are less expensive to manufacture, are available in lower resistivities to produce required power at low voltage conditions and are less sensitive to thermal shock cracking issues relative to ceramic elements.

0031. Locating the PPTC element spaced apart from the thermostatic disc results in a thermal gradient issue that must be managed to prevent the disc from resetting at -40 degrees C ambient and 9 Vdc power conditions. Conventional PPTC protection devices for automotive applications are designed to trip at 120 to 137 degrees C using electrically conductive polymer HDPE (high density polyethylene) and 134 to 169 degrees C using electrically conductive polymer PVDF (polyvinylidene fluoride). The minimum reset temperature of the thermostatic disc is typically 70 degrees C due to automotive manufacturers' specifications and the protection devices operating requirements.

0032. The above noted thermal gradient issues involved with the preferred embodiment can be managed using switching temperatures between 180 and 260 degrees C using selected electrically conductive fluoropolymer compositions and their associated melt temperatures available from Polytronics Incorporated of Taiwan. For example, such materials include electrically conductive polymer ETFE (ethylene tetrafluoroethylene, e.g., Fluon) 260 degrees C melting temperature; electrically conductive polymer ECTFE (ethylene chloro-trifluoroethylene, e.g., Halar) 240 degrees C melting temperature and electrically conductive polymer PCTFE (polychlorotrifluoroethylene, e.g., Neoflon) 210 degrees C melting temperature.

0033. PPTC heater element 22 of the preferred embodiment comprises an electrically conductive, partially cross-linked ECTFE material system that switches at approximately 240 degrees C and results in preventing undesired electrical contact resetting at -40 degrees C while also allowing the use of conventional Nomex gasket electrical insulation materials, to be discussed, without causing thermal degradation of the insulation material. PPTC heater element 22 comprises a layer of carbon filled polymer with a coating of conductive material, such as nickel, on opposed face surfaces 22a, 22b. PPTC heater element 22 has a resistance of approximately 0.3 to 0.5 ohms at a temperature of 25 degrees C. Electrical insulating gasket 24 of suitable material, such as Nomex referenced above, is used to electrically isolate housing 12 and heater seat plate member 20 from heater/terminal plate member 26. Gasket 24 has cut-out windows 24a, 24b in a base portion 24d and is in the form of a generally rectangular sheet having two opposed flaps 24c, preferably pre-bent to extend upwardly from a flat base portion 24d. The gasket is received on lip 20c of the heater seat plate member and extends slightly beyond the lip on two opposed ends while flaps 24c extend upwardly along the sides and beyond corresponding flap extensions 12f (one being shown in Fig. 4) of housing 12. Windows 24a and 24b are provided for access to switching chamber 12c for a spring contact and a stationary contact to be discussed.

0034. A heater/terminal plate member 26, preferably formed of a conventional heater material such as nickel zinc plated steel, bronze, or stainless steel for low power ratings, is configured to extend over the switching chamber and to be receivable on the base portion 24d of gasket 24 and aligned with lips 12d of housing 12 and 20c of heater seat plate member 20. A stationary electrical contact 28 is mounted on the heater/terminal plate member, as by welding thereto, at a location selected to be in alignment with window 24b of gasket 24 and with contact 18 which is adapted to move into and out of electrical engagement with the stationary contact. Also mounted on heater/terminal plate member 26 is a contact spring 30 formed of suitable electrically conductive, spring material, such as stainless steel. The spring has a pair of upwardly extending wings 30b extending from a base portion 30a. A laterally extending weld projection 26a is formed on terminal plate 26 to which base portion 30a is attached, as by welding thereto. Spring 30 extends through window 24a of the gasket and, following completion of the assembly by folding over flaps 12f of the housing to clamp the heater/terminal plate member, through gasket 24, the spring engaging PPTC element 22. A terminal portion 26b extends lengthwise from the plate for connection to the electrical circuit, along with a corresponding terminal plate 12g of housing 12.

0035. With reference to Figs. 9 and 10, a simplified circuit diagram shows an automotive power source P serially connected to a motor M of an engine cooling system and connected in parallel to PPTC heater element 22 and serially connected thermostatic disc 14, electrical contacts 18/28 and heater/terminal plate member 26. The diagram in Fig. 9 shows the circuit during normal operation and Fig. 10 shows the circuit in locked-rotor condition. The following example is given for a 400 watt engine cooling system (ECS) application carrying 30 amps. The low resistance thermostatic disc 14 and heater/terminal plate member path (approximately 2 m-ohms) carries the load current due to the relatively high resistance of the PPTC heater element of approximately 400 m-ohms. A locked-rotor condition decreases the impedance of the motor by approximately 80% producing a 135 amp locked rotor current. This causes i²r heating sufficient to actuate the thermostatic disc thereby opening contacts 18/28. System voltage is then applied to the PTC heater element elevating PPTC heater element 22 to its switching temperature at which point the PPTC heater element resistance increases exponentially to approximately 44 ohms producing 4.5 watts of power that keeps the thermostatic disc above the reset temperature. Load current is simultaneously decreased to 0.32 amps and the over temperature condition of the motor's internal components is eliminated.

0036. A conventional thermostatic disc 14 is used in the preferred embodiment, shown in Fig. 11. A movable electrical contact 18 and a welding slug 16 are welded at opposite ends of the disc 14b, 14a, respectively. The center section 14c, between the welded components, is deformed in a known manner to produce a snap-acting thermostatic disc assembly leaving the material in the vicinity of the slug and electrical contact unformed to minimize fatigue stress associated with snap-action cycling.
According to a modified embodiment 10', the disc 14', as shown in Figs. 12 and 13, is extended beyond welding slug 16 to form an elongated strip 14d. Strip 14d is bent back over itself at 14e and 14f into a U-shape with the outer leg engaging the convex side of heater recess 20a of heater plate 20 forming an improved thermal path for an enhanced heat transfer and modified reset operation.

0037. According to another modification 10" shown in Fig. 14, a bow shaped strip 20k extends from bottom wall 20d at two opposite end portions of recess 20a into engagement with welding slug 16 engaging the slug in thermal and electrical contact therewith to enhance heater transfer and modified reset operation. The bow shaped feature acts like a spring and deforms when slug 16 is pressed into it as the housing and disc assembly are deflected at 12e upon calibration of the protector.

0038. Thus, in accordance with the invention, the thermostatic current path carries load current during normal operation. A locked-rotor condition increases the ampere level 4-6 times. The thermostatic disc is actuated as a result of the i²r heating that increases the temperature of the disc causing it to snap to the open contacts position. The system voltage is then dropped across the high resistance PPTC heater element which produces sufficient power and surface temperature to keep the thermostatic disc from resetting until the potential is removed.

0039. The modified reset automotive protector of the invention provides maximum PTC element size and power generation to elevate the temperature of the entire assembly and maintain the disc in the actuated condition over wide voltage and ambient temperature conditions associated with automotive applications, typically -40 to 110 degrees C and 9 to 16Vdc. The structure optimizes convection heat transfer (air inside the housing) in addition to conduction heat transfer (the PTC heater seat plate member, housing, spring and heater/terminal plate member) to keep the disc from resetting at extreme conditions.

0040. In addition, the structure of the invention facilitates high volume assembly and use of the PTC heater seat plate member air gap 2 conveniently enables calibration of the disc by means of plastic deformation of the housing at the weld slug location, not possible in the prior art design of the '807 patent referenced above.

0041. It should be understood that the preferred embodiments have been described by way of illustrating the invention but that the invention includes various modifications and equivalents of the enclosed embodiments. It is intended to include all modifications and equivalents of the disclosed embodiments falling within the scope of the appended claims.

## Claims

1. An automotive motor protector particularly for underhood placement adapted to provide a modified reset operation upon actuation comprising:
a metallic housing (12) having a bottom wall (12a) and side walls (12b) extending from the bottom wall to form a switching chamber (12c), the walls extending to a selected location spaced from the bottom wall and extending generally laterally outwardly to form a first support lip (12d) around an opening to the chamber,
a thermostatic, current carrying, disc (14) having first and second end portions (14a,14b) cantilever mounted at one end portion on the bottom wall within the switching chamber, a movable contact (18) mounted on the disc adjacent to the second end portion and movable between first and second positions,
a metal heater seat plate (20) received on the first support lip (12d), the heater seat plate being deformed to form a recess (20a) defined by a second bottom wall (20d) and side walls (20e) extending from the second bottom wall, the side walls (20e) extending for a selected distance from the bottom wall (20d) and at the selected distance being bent generally laterally outwardly to form a second support lip (20c) received on the first support lip (12d), the heater seat plate formed with an opening (20b) aligned with the second end portion of the disc,
a positive temperature coefficient resistor element (22) having spaced apart first and second contact layers on opposed sides thereof and being disposed in the recess (20a) with one contact layer engaging the bottom wall (20d) of the recess,
an electrically insulative sheet (24) disposed on the second support lip (20c), the insulative sheet having selected apertures therethrough,
a terminal plate (26) having a face surface mounting a stationary electrical contact (28) and a metallic spring (30) spaced apart from the stationary contact, the terminal plate received on the insulative sheet (24) and overlying the first and second support lips (12d,20c), the stationary electrical contact (28) and the spring (20) being placed in respective alignment with the movable electrical contact (18) and the positive temperature coefficient resistor element (22), the spring (30) engaging the other contact layer of the positive temperature resistor element (22),
the side walls (12b) of the housing being formed with first and second extensions extending from the first support lip (12d) and are bent over to clampingly engage the terminal plate (26) through the insulative sheet with the spring making electrical engagement with the other contact layer of the positive temperature coefficient resistor element as well as biasing the positive temperature coefficient resistor element against the second bottom wall of the recess, the movable electrical contact being movable into and out of engagement with the stationary electrical contact, and
first and second terminal portions (12g,12b) are formed on and extend respectively from the housing and the terminal plate (26).

2. An automotive motor protector according to claim 1 in which the side walls of the heater seat plate recess are tilted to extend from the bottom wall slightly away from the interior of the recess greater than one degree.

3. An automotive motor protector according to claim 1 in which the heater seat plate has first and second opposed face surfaces forming opposed generally concave and convex surfaces defining the recess and the thermostatic disc is formed with an extension at the first end portion that is bent back over itself and having a portion that engages the heater seat plate on the convex surface.

4. An automotive motor protector according to claim 1 in which the thermostatic disc is attached to the housing using a welding slug and an elongated strip of heat conductive material extends from the second bottom wall into thermal and electrical engagement with the said welding slug attached to the thermostatic disc.

5. An automotive motor protector according to claim 1 in which the positive temperature coefficient resistor comprises an electrically conductive, partially cross linked fluoropolymer from the group consisting of ECFTE, ETFE and PCTFE material systems.

6. An automotive motor protector according to claim 1 in which the positive temperature coefficient resistor comprises barium titanate doped with a rare earth.

7. An automotive protector according to claim 1 in which the thermostatic disc is attached to the housing using a welding slug and a bow shaped strip extends from the bottom wall of the heater seat plate at two opposite end portions of the recess of the heater seat plate into engagement with the welding slug.

## Patentansprüche

1. Kraftfahrzeugmotorschutzvorrichtung insbesondere zur Anordnung im Motorraum, die so eingerichtet ist, dass sie bei Betätigung einen modifizierten Rücksetzbetrieb bereitstellt, mit:
einem metallischen Gehäuse (12), das eine Bodenwand (12a) und Seitenwände (12b) aufweist, die sich von der Bodenwand erstrecken und eine Schaltkammer (12c) bilden, wobei sich die Wände zu einer ausgewählten Stelle erstrecken, die von der Bodenwand beabstandet ist, und sich insgesamt seitlich nach außen erstrecken und eine erste Auflagelippe (12d) um eine Öffnung zur Kammer bilden,
einer Strom führenden Thermostatscheibe (14), die einen ersten und einen zweiten Endabschnitt (14a, 14b) aufweist und an einem Endabschnitt freitragend an der Bodenwand innerhalb der Schaltkammer angebracht ist, wobei ein beweglicher Kontakt (18) angrenzend an den zweiten Endabschnitt an der Scheibe angebracht und zwischen einer ersten und einer zweiten Stellung bewegbar ist,
einer Metallheizelementaufnahmeplatte (20), die auf der ersten Auflagelippe (12d) aufgenommen ist, wobei die Heizelementaufnahmeplatte so verformt ist, dass sie eine Aussparung (20a) bildet, die von einer zweiten Bodenwand (20d) und Seitenwänden (20e) definiert ist, die sich von der zweiten Bodenwand erstrecken, wobei sich die Seitenwände (20e) um einen ausgewählten Abstand von der Bodenwand (20d) erstrecken und in dem ausgewählten Abstand insgesamt seitlich nach außen gebogen sind und eine zweite Auflagelippe (20c) bilden, die auf der ersten Auflagelippe (12d) aufgenommen ist, wobei die Heizelementaufnahmeplatte mit einer Öffnung (20b) ausgebildet ist, die mit dem zweiten Endabschnitt der Scheibe fluchtet,
einem Widerstandselement (22) mit positivem Temperaturkoeffizienten, das eine erste und eine zweite Kontaktschicht voneinander beabstandet auf seinen entgegengesetzten Seiten aufweist und in der Aussparung (20a) angeordnet ist, wobei eine Kontaktschicht an der Bodenwand (20d) der Aussparung angreift,
einer elektrisch isolierenden Platte (24), die auf der zweiten Auflagelippe (20c) angeordnet ist, wobei die isolierende Platte ausgewählte durch sie hindurchgehende Durchbrüche aufweist,
einer Anschlussplatte (26), die eine Fläche hat, auf der ein ortsfester elektrischer Kontakt (28) und eine von dem ortsfesten Kontakt beabstandete metallische Feder (30) oberflächenmontiert sind, wobei die Anschlussplatte auf der isolierenden Platte (24) aufgenommen ist und über der ersten und der zweiten Auflagelippe (12d, 20c) liegt, wobei der ortsfeste elektrische Kontakt (28) und die Feder (30) fluchtend mit dem beweglichen elektrischen Kontakt (18) bzw. dem Widerstandselement (22) mit positivem Temperaturkoeffizienten angeordnet sind, wobei die Feder (30) an der anderen Kontaktschicht des Widerstandselements (22) mit positiver Temperatur angreift,
wobei die Seitenwände (12b) des Gehäuses mit einem ersten und einem zweiten Fortsatz ausgebildet sind, die sich von der ersten Auflagelippe (12d) erstrecken und so umgebogen sind, dass sie durch die isolierende Platte hindurch klemmend an der Anschlussplatte (26) angreifen, wobei die Feder mit der anderen Kontaktschicht des Widerstandselements mit positivem Temperaturkoeffizienten in elektrischen Kontakt gelangt sowie das Widerstandselement mit positivem Temperaturkoeffizienten gegen die zweite Bodenwand der Aussparung beaufschlagt, wobei der bewegliche elektrische Kontakt in und außer Eingriff mit dem ortsfesten elektrischen Kontakt bewegbar ist und
ein erster und ein zweiter Endabschnitt (12g, 26b) am Gehäuse bzw. an der Anschlussplatte (26) gebildet sind und sich jeweils davon erstrecken.

2. Kraftfahrzeugmotorschutzvorrichtung nach Anspruch 1, bei der die Seitenwände der Heizelementaufnahmeplattenaussparung so geneigt sind, dass sie sich von der Bodenwand geringfügig um mehr als ein Grad vom Innenraum der Aussparung weg erstrecken.

3. Kraftfahrzeugmotorschutzvorrichtung nach Anspruch 1, bei der die Heizelementaufnahmeplatte eine erste und eine zweite Stirnfläche hat, die einander gegenüberliegen und gegentiberliegende, allgemein konkave und konvexe Flächen bilden, die die Aussparung definieren, und die Thermostatscheibe mit einem Fortsatz am ersten Endabschnitt ausgebildet ist, der auf sich selbst zurückgebogen ist und mit einem Abschnitt an der Heizelementaufnahmeplatte an der konvexen Fläche angreift.

4. Kraftfahrzeugmotorschutzvorrichtung nach Anspruch 1, bei der die Thermostatscheibe unter Verwendung einer Schweißperle am Gehäuse befestigt ist und ein länglicher Streifen wärmeleitfähigen Materials sich von der zweiten Bodenwand in thermischen und elektrischen Eingriff mit der an der Thermostatscheibe befestigten Schweißperle erstreckt.

5. Kraftfahrzeugmotorschutzvorrichtung nach Anspruch 1, bei der der Widerstand mit positivem Temperaturkoeffizienten ein elektrisch leitfähiges, teilvernetztes Fluorpolymer aus der aus ECFTE-, ETFE- und PCTFE-Materialsystemen bestehenden Gruppe umfasst.

6. Kraftfahrzeugmotorschutzvorrichtung nach Anspruch 1, bei der der Widerstand mit positivem Temperaturkoeffizienten mit einer seltenen Erde dotiertes Bariumtitanat umfasst.

7. Kraftfahrzeugschutzvorrichtung nach Anspruch 1, bei der die Thermostatscheibe unter Verwendung einer Schweißperle am Gehäuse befestigt ist und sich ein bügelförmiger Streifen von der Bodenwand der Heizelementaufnahmeplatte an zwei entgegengesetzten Endabschnitten der Aussparung der Heizelementaufnahmeplatte in Eingriff mit der Schweißperle erstreckt.

## Revendications

1. Dispositif de protection d'un moteur automobile en particulier pour un placement sous le capot, adapté pour fournir une opération de réinitialisation modifiée lors d'un actionnement, comprenant :
un logement métallique (12) qui présente une paroi inférieure (12a) et des parois latérales (12b) qui s'étendent à partir de la paroi inférieure pour former une chambre de commutation (12c), les parois s'étendant vers un emplacement sélectionné espacé de la paroi inférieure et s'étendant généralement de manière latérale vers l'extérieur pour former un premier rebord de support (12d) autour d'une ouverture de la chambre ;
un disque thermostatique (14) véhiculant un courant, qui présente des première et seconde parties d'extrémité (14a, 14b) montées en porte-à-faux au niveau d'une partie d'extrémité sur la paroi inférieure à l'intérieur de la chambre de commutation, un contact mobile (18) monté sur le disque adjacent à la seconde partie d'extrémité et mobile entre des première et seconde positions ;
une plaque de siège de dispositif de chauffage métallique (20) reçue sur le premier rebord de support (12d), la plaque de siège du dispositif de chauffage étant déformée de façon à former un renfoncement (20a) défini par une seconde paroi inférieure (20d) et des parois latérales (20e) qui s'étendent à partir de la seconde paroi inférieure, les parois latérales (20e) s'étendant sur une distance sélectionnée à partir de la paroi inférieure (20d) et, au niveau de la distance sélectionnée, étant pliée généralement de manière latérale vers l'extérieur pour former un second rebord de support (20c) reçu sur le premier rebord de support (12d), la plaque de siège du dispositif de chauffage étant conçue avec une ouverture (20b) alignée sur la seconde partie d'extrémité du disque ;
un élément de résistance à coefficient de température positif (22) qui présente des première et seconde couches de contact espacées sur les côtés opposés de celui-ci, et qui est disposé dans le renfoncement (20a), une couche de contact venant en prise avec la paroi inférieure (20d) du renfoncement ;
une feuille isolante électriquement (24) disposée sur le second rebord de support (20c), la feuille isolante présentant des ouvertures sélectionnées dans celle-ci ;
une plaque de borne (26) qui présente une surface de face, sur laquelle sont montés un contact électrique fixe (28) et un ressort métallique (30) espacé du contact fixe, la plaque de borne étant reçue sur la feuille isolante (24) et chevauchant les premier et second rebords de support (12d, 20c), le contact électrique fixe (28) et le ressort (30) étant placés dans un alignement respectif avec le contact électrique mobile (18) et l'élément de résistance à coefficient de température positif (22), le ressort (30) venant en prise avec l'autre couche de contact de l'élément de résistance à coefficient de température positif (22) ;
les parois latérales (12b) du logement étant formées avec des première et seconde extensions qui s'étendent à partir du premier rebord de support (12d) et étant repliées de façon à venir en prise par serrage avec la plaque de borne (26) à travers la feuille isolante, le ressort réalisant une mise en prise électrique avec l'autre couche de contact de l'élément de résistance à coefficient de température positif et sollicitant l'élément de résistance à coefficient de température positif contre la seconde paroi inférieure du renfoncement, le contact électrique mobile étant mobile dans une mise en prise, et hors de celle-ci, avec le contact électrique fixe ; et
des première et seconde parties de borne (12g, 26b) sont formées sur le boîtier et sur la plaque de borne (26), et s'étendent respectivement à partir de ceux-ci.

2. Dispositif de protection d'un moteur automobile selon la revendication 1, dans lequel les parois latérales du renfoncement de plaque de siège du dispositif de chauffage sont inclinées de façon à s'étendre à partir de la paroi inférieure en s'éloignant légèrement de l'intérieur du renfoncement, de plus d'un degré.

3. Dispositif de protection d'un moteur automobile selon la revendication 1, dans lequel la plaque de siège du dispositif de chauffage présente des première et seconde surfaces de face opposées qui forment des surfaces opposées généralement concave et convexe qui définissent le renfoncement, et le disque thermostatique est conçu avec une extension au niveau de la première partie d'extrémité qui est repliée sur elle-même et présente une partie qui vient en prise avec la plaque de siège du dispositif de chauffage sur la surface convexe.

4. Dispositif de protection d'un moteur automobile selon la revendication 1, dans lequel le disque thermostatique est fixé sur le logement à l'aide d'un pion de soudage, et une bande allongée de matériau conducteur de chaleur s'étend à partir de la seconde paroi inférieure dans une mise en prise thermique et électrique avec ledit pion de soudage fixé sur le disque thermostatique.

5. Dispositif de protection d'un moteur automobile selon la revendication 1, dans lequel la résistance à coefficient de température positif comprend un polymère fluoré en partie réticulé et électriquement conducteur, et qui appartient au groupe constitué par des systèmes de matériau ECFTE, ETFE et PCTFE.

6. Dispositif de protection d'un moteur automobile selon la revendication 1, dans lequel la résistance à coefficient de température positif comprend du titanate de baryum dopé avec une terre rare.

7. Dispositif de protection d'un moteur automobile selon la revendication 1, dans lequel le disque thermostatique est fixé sur le logement à l'aide d'un pion de soudage, et une bande en forme d'arc s'étend à partir de la paroi inférieure de la plaque de siège du dispositif de chauffage au niveau de deux parties d'extrémité opposées du renfoncement de la plaque de siège du dispositif de chauffage dans une mise en prise avec le pion de soudage.
